# EUROPÄISCHE PATENTSCHRIFT

(11) **EP 0 853 217 B1**
(45) Veröffentlichungstag und Bekanntmachung des Hinweises auf die Patenterteilung: **11.04.2001**
(21) Anmeldenummer: 97100243.1
(22) Anmeldetag: 09.01.1997
(51) Int. Cl.: F24F 13/02, F16L 3/133

(54) **Vorrichtung zum Abhängen von Luftkanälen oder dergleichen**
Device for suspending air ducts or the like
Dispositif de suspension pour des conduits d'air ou similaires

(43) Veröffentlichungstag der Anmeldung: 15.07.1998
(73) Patentinhaber: Eidmann, Jürgen, 61348 Bad Homburg (DE)
(72) Erfinder: Eidmann, Jürgen, 61348 Bad Homburg (DE)
(74) Vertreter: Honke, Manfred, Dr.-Ing.

(56) Entgegenhaltungen:
- DE-A- 2 348 028
- DE-A- 2 718 839
- DE-A- 3 532 983
- US-A- 3 575 214
- PATENT ABSTRACTS OF JAPAN vol. 014, no. 019 (M-919), 16.Januar 1990 & JP 01 261588 A (FUJIMORI KOGYO KK), 18.Oktober 1989,

## Beschreibung

Die Erfindung betrifft eine Vorrichtung zum Abhängen von Luftkanälen oder dergleichen Bauteilen von Klima- und Lüftungsanlagen, mit zumindest einer Tragstange und einer feuerwiderstandsfähigen Ummantelung aus Brandschutzmaterial für die Tragstange.

Bei raumlufttechnischen Anlagen wie Klima- und Lüftungsanlagen werden Luftkanäle regelmäßig mittels Tragstangen, bei denen es sich im allgemeinen um Gewindestangen handelt, an der Decke abgehängt. Derartige Abhängungen müssen eine hinreichende Feuerwiderstandsfähigkeit erfüllen. Ein Kriterium für die Feuerwiderstandsfähigkeit ist die Längung der Tragstangen, die im Rahmen eines Brandversuches bei Temperaturen bis über 1.000° C ermittelt wird und eine maximale Längung von beispielsweise 40 mm nicht überschreiten darf, und zwar unabhängig von der Länge der Tragstangen. Um eine hinreichende Feuerwiderstandsfähigkeit zu erreichen, werden die Tragstangen mit einem Brandschutzmaterial ummantelt. Diese Ummantelung besteht regelmäßig aus plattenartigen oder streifenartigen Brandschutzprofilen (vgl. DE 27 18 839). Die Brandschutzprofile müssen in Anpassung an die jeweilige Abhängekonstruktion angefertigt und auf der Baustelle zur Erzeugung der Brandschutzummantelung zusammengesetzt und miteinander verklebt werden. Das ist in fertigungstechnischer Hinsicht außerordentlich aufwendig. Hinzu kommt, daß eine derartige Brandschutzummantelung wasserdurchlässig ist. Das sich in der Brandschutzummantelung befindliche Wasser dehnt sich bei Hitzeeinwirkung aus und kann auf der Außenseite der Brandschutz ummantelung austreten. Dadurch werden die Isolierwirkung des Brandschutzmaterials und folglich die Feuerwiderstandsfähigkeit erheblich herabgesetzt.

Außerdem ist ein feuerdämmendes Rohr aus Stahl, Aluminium oder dergleichen bekannt, welches von einer wärmeisolierenden Schicht aus einem anorganischen Silikat-Schaumstoff umgeben ist. Diese Schicht kann wiederum von einem Außenmantel aus Metall umgeben sein (vgl. Patent Abstacts of Japan Vol. 014, No. 019, JP 01 26 1588 A).

Der Erfindung liegt die Aufgabe zugrunde, eine Vorrichtung zum Abhängen von Luftkanälen oder dergleichen Bauteilen von Klima- und Lüftungsanlagen der eingangs beschriebenen Ausführungsform zu schaffen, deren Brandschutzummantelung sich durch einfache Montage und kompakte Bauweise bei dennoch hinreichend hoher Feuerwiderstandsfähigkeit auszeichnet.

Diese Aufgabe löst die Erfindung bei einer gattungsgemäßen Abhängevorrichtung dadurch, daß die Ummantelung als auf die Tragstange auffädelbare Rohrabschnitte vorgegebener Länge ausgebildet ist, wobei die Rohrabschnitte einen Rohrmantel aus feuerbeständigem bzw. nicht brennbarem Material und eine Innenfüllung aus Brandschutzmaterial mit einer zentralen Durchgangsöffnung für die Tragstange aufweisen, und wobei die Tragstange die Rohrabschnitte zentriert und benachbarte Stoßflächen der aufeinander gesetzten Rohrabschnitte dicht bei dicht gegeneinander anliegen. - Diese Maßnahmen der Erfindung haben zur Folge, daß sich die Rohrabschnitte aus Rohrmaterial und Innenfüllung fabrikseitig vorfertigen lassen und an der Baustelle nur noch auf die betreffenden Tragstangen aufgefädelt werden müssen, um die erforderliche Feuerwiderstandsfähigkeit zu erreichen. Überraschenderweise ist diese Feuerwiderstandsfähigkeit selbst dann gewährleistet, wenn mehrere solcher Rohrabschnitte unter Bildung der Brandschutzummantelung aufeinander aufgesetzt werden, weil aus der jeweiligen Tragstange ein Zentriereffekt resultiert und die benachbarten Stoßflächen der aufeinandergesetzten Rohrabschnitte dicht bei dicht gegeneinander anliegen. Daran ändert auch die sich in einem Brandfall entwickelnde Hitzebeaufschlagung nichts. Von Bedeutung ist ferner die Tatsache, daß der aus nicht brennbarem Material bzw. feuerbeständige Material bestehende Rohrmantel ein außenumfangseitiges Austreten von Wasser aus dem Brandschutzmaterial verhindert. Dadurch bleibt eine hohe Isolationswirkung und folglich Feuerwiderstandsfähigkeit im Brandfalle erhalten. Daraus wiederum resuliert die Möglichkeit, eine geringere Wandstärke für die Brandschutzummantelung als bei herkömmlichen Ausführungsformen zu verwirklichen, so daß die erfindungsgemäße Brandschutzummantelung verhältnismäßig kompakt bzw. schlank baut. Auch daraus resultiert ein montagetechnischer Vorteil.

Weitere erfindungswesentliche Merkmale sind im folgenden aufgeführt. So besteht der Rohrmantel vorzugsweise aus Stahlblech, zum Beispiel verzinktem Stahlblech. Außerdem kann der Rohrmantel als Wickelfalzrohr ausgebildet sein. Erfindungsgemäß ist die Innenfüllung aus Brandschutzmaterial in den Rohrmantel eingegossen, so daß ein inniger Verbund zwischen dem Rohrmantel aus Stahlblech und der Innenfüllung erreicht wird und zusätzliche Verankerungsbzw. Befestigungsmaßnahmen zwischen Rohrmantel und Innenfüllung nicht erforderlich sind.

Nach einem Vorschlag der Erfindung, dem selbständige Bedeutung zukommt, ist vorgesehen, daß das Brandschutzmaterial aus
5 bis 10 Gewichtsprozent, vorzugsweise 8 Gewichtsprozent Kalzium-Silikat,
25 bis 35 Gewichtsprozent, vorzugsweise 30 Gewichtsprozent Gips,
57 bis 65 Gewichtsprozent, vorzugsweise 62 Gewichtsprozent weißen Zement,
besteht.

Ein derartiges Brandschutzmaterial zeichnet sich durch eine besonders hohe Isolationswirkung und Feuerwiderstandsfähigkeit aus, läßt sich darüber hinaus unschwer verarbeiten und eben beispielsweise in den Rohrmantel eingießen. Die Rohrabschnitte weisen vorzugsweise eine Länge von 500 mm oder 750 mm auf. Darüber hinaus lassen sich im Rahmen der Erfindung aber auch andere gängige Rohrlängen verwirklichen. Die Enden und folglich Stoßflächen der Rohrabschnitte können als ebene oder konisch oder schalenartig ineinandergreifende Flächen ausgebildet sein. - Die Durchgangsöffnung ist vorzugsweise als eine zentrale Bohrung in dem Brandschutzmaterial ausgebildet.

Im folgenden wird die Erfindung anhand einer lediglich ein Ausführungsbeispiel darstellenden Zeichnung näher erläutert; es zeigen:

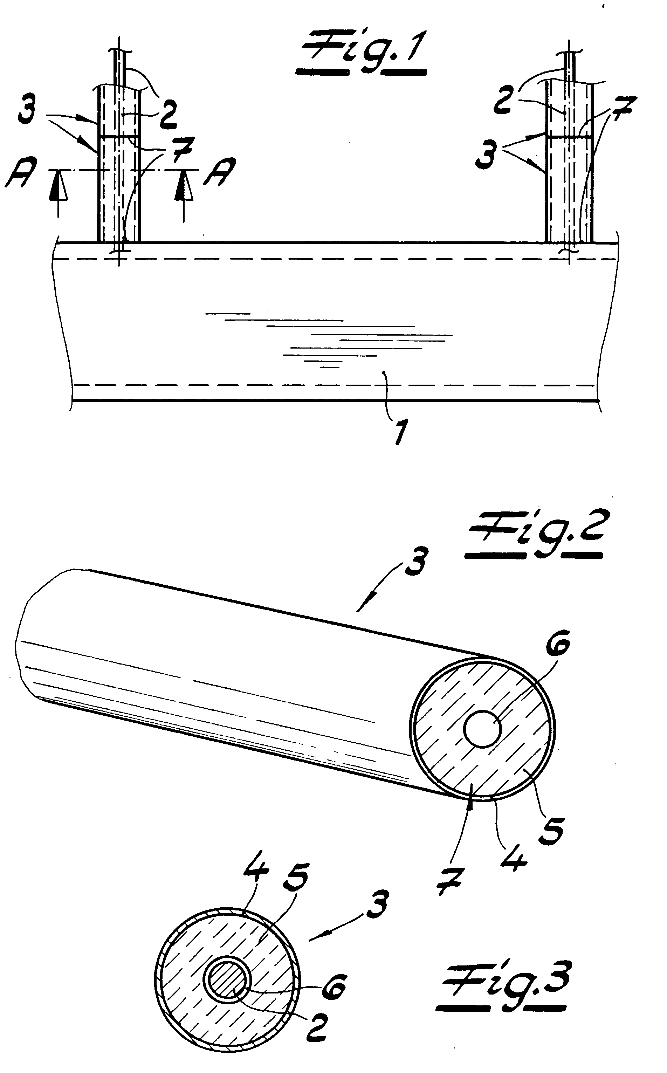

- Fig. 1: in schematischer Ansicht und ausschnittsweise einen mittels mehrerer Tragstangen mit Brandschutzummantelung an einer Raumdecke abgehängten Luftkanal,
- Fig. 2: eine Brandschutzummantelung mit einem Rohrmantel und einer Innenfüllung aus Brandschutzmaterial im perspektivischer Darstellung,
- Fig. 3: einen Querschnitt AA durch eine Tragstange mit Brandschutzummantelung nach Fig. 1.

In den Figurenist eine Vorrichtung zum Abhängen von Luftkanälen 1 oder dergleichen Bauteilen von Klima- und Lüftungsanlagen in Räumen dargestellt. Diese Vorrichtung weist in ihrem grundsätzlichen Aufbau zumindest eine Tragstange 2 und nach dem Ausführungsbeispiel eine Gewindestange mit einer feuerwiderstandsfähigen Ummantelung aus Brandschutzmaterial für die Tragstange auf. Die Ummantelung ist als auf die Tragstange 2 aufgefädelte Rohrabschnitte 3 vorgegebener Länge ausgebildet. Die Rohrabschnitte 3 weisen einen Rohrmantel 4 aus feuerbeständigem bzw. nicht brennbarem Material und einer Innenfüllung 5 aus Brandschutzmaterial mit einer zentralen Durchgangsöffnung 6 für die Tragstange 2 auf. Der Rohrmantel 4 besteht aus Stahlblech. Die Innenfüllung 5 ist in den Rohrmantel 4 eingegossen. Die nach dem Ausführungsbeispiel verwendeten Rohrabschnitte 3 weisen eine Länge von 500 mm auf. Die Durchgangsöffnung 6 für die Tragstange 2 bzw. Gewindestange ist als Zentralbohrung in dem Brandschutzmaterial ausgebildet. Die endseitigen Stoßflächen 7 der Rohrabschnitte 3 sind nach dem Ausführungsbeispiel als ebene Flächen ausgeführt.

## Patentansprüche

1. Vorrichtung zum Abhängen von Luftkanälen (1) oder dergleichen Bauteilen von Klima- und Lüftungsanlagen, mit zumindest einer Tragstange (2) und einer feuerwiderstandsfähigen Ummantelung aus Brandschutzmaterial für die Tragstange (2), dadurch gekennzeichnet, dass die Ummantelung als auf die Tragstange (2) auffädelbare Rohrabschnitte (3) vorgegebener Länge ausgebildet ist, wobei die Rohrabschnitte (3) einen Rohrmantel (4) aus feuerbeständigem Material und eine Innenfüllung (5) aus Brandschutzmaterial mit einer zentralen Durchgangsöffnung (6) für die Tragstange (2) aufweisen, und wobei die Tragstange (2) die Rohrabschnitte (3) zentriert und benachbarte Stoßflächen (7) der aufeinander gesetzten Rohrabschnitte (3) dicht bei dicht gegeneinander anliegen.

2. Vorrichtung nach Anspruch 1, dadurch gekennzeichnet, daß der Rohrmantel (4) aus Stahlblech, zum Beispiel verzinktem Stahlblech besteht.

3. Vorrichtung nach Anspruch 1 oder 2, dadurch gekennzeichnet, daß der Rohrmantel (4) als Wickelfalzrohr ausgebildet ist.

4. Vorrichtung nach einem der Ansprüche 1 bis 3, dadurch gekennzeichnet, daß die Innenfüllung (5) aus Brandschutzmaterial in den Rohrmantel (4) eingegossen ist.

5. Vorrichtung nach einem der Ansprüche 1 bis 4, dadurch gekennzeichnet, daß das Brandschutzmaterial aus
5 bis 10 Gewichtsprozent, vorzugsweise 8 Gewichtsprozent Kalzium-Silikat,
25 bis 35 Gewichtsprozent, vorzugsweise 30 Gewichtsprozent Gips,
57 bis 65 Gewichtsprozent, vorzugsweise 62 Gewichtsprozent weißen Zement,
besteht.

6. Vorrichtung nach einem der Ansprüche 1 bis 5, dadurch gekennzeichnet, daß die Durchgangsöffnung (2) in dem Brandschutzmaterial als Bohrung ausgebildet ist.

7. Vorrichtung nach einem der Ansprüche 1 bis 6, dadurch gekennzeichnet, daß die Länge der Rohrabschnitte (3) 500 mm oder 750 mm beträgt.

8. Vorrichtung nach einem der Ansprüche 1 bis 7, dadurch gekennzeichnet, daß die endgültigen Stoßflächen (7) der Rohrabschnitte als ebene oder konisch ineinandergreifende oder schalenförmig ineinandergreifende Flächen ausgebildet sind.

## Claims

1. An apparatus for hanging air ducts (1) or similar components of air-conditioning and ventilation installations, comprising at least one supporting rod (2) and a fire-resistant cladding of fire protection material for the supporting rod (2), characterised in that the cladding is constructed as tubular sections (3) of predetermined length which can be threaded on to the supporting rod (2), wherein the tubular sections (3) comprise a tubular shell (4) made of fire-resisting material and an internal filling (5) of fire protection material with a central passageway opening (6) for the supporting rod (2), and wherein the supporting rod (2) centres the tubular sections (3), and the adjacent abutting faces (7) of the tubular sections (3) which are placed on each other are seated closely against each other.

2. An apparatus according to claim 1, characterised in that the tubular shell (4) consists of sheet steel, for example of galvanised steel.

3. An apparatus according to claims 1 or 2, characterised in that the tubular shell (4) is formed as a folded spiral tube.

4. An apparatus according to any one of claims 1 to 3, characterised in that the internal filling (5) of fire protection material is cast into the tubular shell (4).

5. An apparatus according to any one of claims 1 to 4, characterised in that the fire protection material consists of
5 to 10 percent by weight, preferably 8 percent by weight, of calcium silicate,
25 to 35 percent by weight, preferably 30 percent by weight, of gypsum, and
57 to 65 percent by weight, preferably 62 percent by weight, of white cement.

6. An apparatus according to any one of claims 1 to 5, characterised in that the passageway opening (2) in the fire protection material is formed as a bore.

7. An apparatus according to any one of claims 1 to 6, characterised in that the length of the tubular sections (3) is 500 mm or 750 mm.

8. An apparatus according to any one of claims 1 to 7, characterised in that the abutting end faces (7) of the tubular sections are formed as flat or conical interlocking faces or as dish-like interlocking faces.

## Revendications

1. Dispositif de suspension pour des conduits d'air (1) ou des composants similaires d'installations de climatisation et de ventilation, comprenant au moins une tige de support (2) et un gainage résistant au feu en un matériau pare-feu pour la tige de support (2), caractérisé par le fait que le gainage est réalisé sous la forme de tronçons de tuyau (3) de longueur prédéterminée, susceptibles d'être enfilés sur la tige de support (2), les tronçons de tuyau (3) présentant une enveloppe (4) en matériau réfractaire et un remplissage intérieur (5) en matériau pare-feu avec une ouverture de passage (6) pour la tige de support (2), la tige de support (2) centrant les tronçons de tuyau (3) et les surfaces d'extrémités voisines (7) des tronçons de tuyau (3) superposés étant appliquées étroitement les unes contre les autres.

2. Dispositif suivant la revendication 1, caractérisé par le fait que l'enveloppe de tuyau (4) est constituée de tôle d'acier, par exemple de tôle d'acier zinguée.

3. Dispositif suivant la revendication 1 ou 2, caractérisé par le fait que l'enveloppe de tuyau (4) est réalisée sous forme de tuyau enroulé agrafé.

4. Dispositif suivant l'une des revendications 1 à 3, caractérisé par le fait que le remplissage intérieur (5) en matériau pare-feu est coulé dans l'enveloppe de tuyau (4).

5. Dispositif suivant l'une des revendications 1 à 4, caractérisé par le fait que le matériau pare-feu est constitué de
5 à 10 % en poids, de préférence 8 % en poids de silicate de calcium,
25 à 35 % en poids, de préférence 30 % en poids de plâtre,
57 à 65 % en poids, de préférence 62 % en poids de ciment blanc.

6. Dispositif suivant l'une des revendications 1 à 5, caractérisé par le fait que l'ouverture de passage (6) dans le matériau pare-feu est réalisée sous forme de trou de passage central.

7. Dispositif suivant l'une des revendications 1 à 6, caractérisé par le fait que la longueur des tronçons de tuyau (3) est de 500 mm ou 750 mm.

8. Dispositif suivant l'une des revendications 1 à 7, caractérisé par le fait que les surfaces de jonction (7) aux extrémités des tronçons de tuyau sont réalisées sous forme de surfaces planes ou de surfaces s'interpénétrant de façon conique ou de surfaces s'interpénétrant en forme de coquille.
